# EUROPEAN PATENT SPECIFICATION

(11) **EP 1 600 672 B1**
(45) Date of publication and mention of the grant of the patent: **14.05.2008**
(21) Application number: 05011200.2
(22) Date of filing: 24.05.2005
(51) Int. Cl.: F16J 15/32

(54) **PTFE sealing device**
PTFE - Dichtungsvorrichtung
Dispositif d'étanchéité en PTFE

(30) Priority: 28.05.2004 BR 0402110
(43) Date of publication of application: 30.11.2005
(73) Proprietor: Sabo Industria e Comércio Ltda., Sao Paulo SP. CEP 05036-001 (BR)
(72) Inventor: Oricchio, Lourenco, Agnello, Junior, S. Paulo (BR)
(74) Representative: Ferreira Magno, Fernando Antonio

(56) References cited:
- EP-A- 1 267 106
- US-A1- 2004 007 826

## Description

This invention refers to a sealing device belonging to the field of spare parts for car engines, particularly to a PTFE sealing device, which was been improved for meeting test requirements concerning the sealing of internal combustion engines.

The PTFE retainer is already known, applied to internal combustion engines for sealing, for instance, the interstice between the crankshaft and the crankcase opening or other, formed, in essence: by an annular casing; a main polytetrafluoroethylene sealing element ("PTFE"), based on the casing and which seals against the shaft; and, by an ancillary rubber sealing element for preventing grime to enter the sealing area.

As a rule, after the assembly of an internal combustion engine is completed, there including the assembly of the sealing system, a sealing test for the engine is conducted. Such a test generally comprises the air injection into the engine and the checking, through proper means, of possible leakages. It happens that the PTFE sealing elements are relatively rigid, and for that reason, they are accommodated around the shaft or other surfaces to be sealed, leaving narrow interstices through which the lubricating oil from the engines does not leak under regular use, but through which the air employed in the test escapes. Thus, sealing test results are negative, even if the PTFE retainer provides proper sealing for the oil. It is not desirable.

On the other hand, the sealing test may show leakages construed as PTFE retainers' predictable leakages, notwithstanding other leaking points arising, for instance, from fissure or porosity in the crankcase, may exist, or other factors that cannot be so detected. It masks the tests and jeopardizes their final result.

In EP 1267106 is described a solution to avoid air leakage through the narrow interstices between the PTFE sealing element and the surface to be sealed, during an engine sealing test, by clogging said narrow interstices with qrease or gel which creates a humid environment between PTFE sealing element and the surface to be sealed.

In US 2004/007826 is described a solution to avoid air leakage through the narrow interstices between the PTFE sealing element and the surface to be sealed, during an engine sealing test, by clogging said narrow interstices with a thixotropic medium, which creates a humid environment between PTFE sealing element and the surface to be sealed.

In present invention is described a solution to avoid air leakage through the narrow interstices between the PTFE sealing element and the surface to be sealed, during an engine sealing test. The PTFE sealing element is originally provided with a thin layer of rubber-type material enough for sealing said narrow interstices, which creates a dry environment between PTFE sealing element and the surface to be sealed.

In the present invention the meaning of the PTFE sealing element being originally provided with a thin layer of rubber-type material is that a thin layer of rubber-type material is attached to the PTFE sealing element during its production.

So, the purpose of the invention subject matter of this patent is to provide a PTFE sealing device that overcomes the problems normally generated by such a type of sealing in internal combustion engine sealing tests, as provided for above.

Another purpose is to provide a PTFE sealing device that despite of overcoming the problem above is not, for such a reason, constructed and/or manufactured with complexity levels that makes it an uninteresting one as compared to the conventional model.

Another purpose is to provide a PTFE sealing device of proper cost in comparison to its peers.

Therefore, in the view of the aforementioned matters, and intending to overcome them, and in order to achieve the related purposes, the improvement in a PTFE sealing device was developed, subject matter of these letters patent, which consists of originally providing the PTFE sealing element, at least as regards its portion that serves as a sealing against the shaft or other surface, in a thin layer of rubber-type material, proper for providing sealing against the passage of air in the sealing test, and proper for being removed upon engine first run, without prejudice to its lubricant oil sealing provided by the PTFE element.

Such an embodiment of the PTFE sealing device overcomes the problems usually observed in such a kind of sealing upon the sealing test conducted in the engine where it is fixed, as aforementioned, once said rubber-type material layer is enough for sealing air passage, avoiding thereby test jeopardy, and for being removed upon engine first run, from which the PTFE element starts to seal on an usually basis

Notwithstanding the aforementioned advantage provided by the sealing device in accordance with this invention, it has also the advantage of being not constructed or manufactured with complexity and/or difficulty and/or cost levels that make it improper in comparison to conventional PTFE retainers.

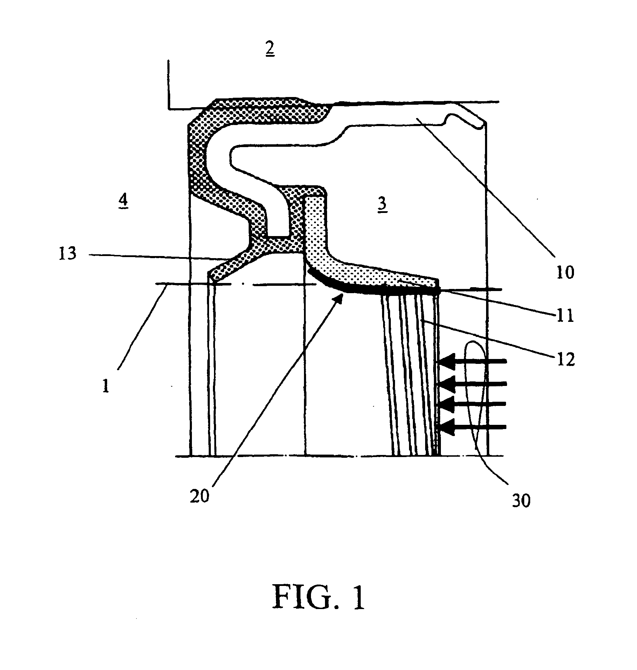

Figure 1 attached shows, by way of illustration only and on a non-restrictive basis, a PTFE sealing .device, subject matter of these letters patent, in which a detail of a retainer section is seen as it is originally manufactured, and the indication of how its rubber-type material layer seals the surface to be sealed during the sealing test.

As illustrated by the aforementioned figure, the sealing device subject matter of these letters patent is intended to seal the interstice between, for instance, the end of a crankshaft 1 and the crankcase opening 2 receiving said end, providing thereby the insulation between the inner 3 and outer 4 environment of the engine or other items, and, in one event and embodiment, it is a retainer (pursuant to the figure attached) essentially comprehended: by an annular casing 10; by a main polytetrafluoroethylene sealing element ("PTFE") 11 based on the casing, and which serves as a sealing to said surface 1, whose sealing surface may be provided with an hydrodynamic sealing groove 12; and by ancillary rubber or comparable sealing element(s) 13, which protect(s) the sealing region against incoming grime.

In this improvement, the main PTFE sealing element 11, or at least its portion that serves as a sealing against surface to be sealed 1, is originally provided with the application of a thin rubber-type material layer 20 enough for sealing eventual interstices defined between the PTFE sealing element surface 11 and the surface to be sealed 1, in order to provide sealing enough for preventing the passage of air 30 between the inner 3 and the outer 4 environment, or in the retainer inverted assembly embodiment that shall pass between engine outer 3 and the inner 4 environment during its sealing test.

Thus, the retainer, in accordance with this invention, operates as follows: When it is first fixed to the place of use, the rubber-type material layer 20 incorporated in the sealing portion of the PTFE sealing element 11 seals, against the surface to be sealed, such as the end of a crankshaft 1, providing a sealing level enough for preventing the passage of air 30 during the engine sealing test where the retainer is used, and a more accurate final result for the test as well. In shaft(s) 1 first run, upon engine start-up, the rubber-type material layer 20 is removed by attrition and the sealing surface for the PTFE element 11 starts to seal, on the customary basis, directly against the shaft surface, providing a sealing level proper to avoid lubricating oil leakage between engine inner 3 and outer 4 environments, all without prejudice to the system.

In the aforementioned basic embodiment, the PTFE sealing device subject matter of these letters patent may have changes related to materials, dimensions, construction and/or embodiment details, without escaping from the scope of the claim.

The rubber type sealing layer for sealing air passage (20) may be made of rubber, paint, silicone, elastomeric material or other items used in automotive sealing.

## Claims

1. - A PTFE sealing device comprising a retainer or a integrated sealing system essentially formed by: an annular casing (10); by a main polytetrafluoroethylene ("PTFE") sealing element (11) laying over the casing that seals against the shaft to be sealed as a crankshaft (1) or others, and the surface of which may be provided with an hydrodynamic sealing groove (12); and by rubber or similar material sealing element(s) (13), which protect the sealing portion against incoming grime, or which provides all of the sealing required to the area where the sealing device is used, **characterized in that** the main PTFE sealing element (11) is originally provided with a thin layer (20) of rubber-type silicon, paint, or elastomer enough for sealing, when in place, the eventual interstices defined between the surface of the PTFE sealing element (11) and the surface to be sealed (1), for preventing the air passage (30) during the engine sealing test conducted as regards the sealing device, which test is conducted with air injection into the engine.

## Patentansprüche

1. - Eine Dichtungsvorrichtung aus PTFE, welche eine Dichtung oder ein eingebautes Dichtungssystem beinhaltet, im Wesentlichen bestehend aus: einem ringförmigen Gehäuse (10); einem Hauptdichtungselement aus Polytetrafluorethen ("PTEE"), welches auf dem Gehäuse aufliegt und die abzudichtende Welle dichtet, sowie eine Kurbelwelle (1) o. A., deren Oberfläche mit einer hydrodinamischen Dichtungsnut (12) versehen sein kann; und durch Dichtungselement(e) aus Gummimaterial o. ä (13) welche(s) teilweise die Dichtung vor eindringendem Schmutz schützt, oder welches alle erforderliche Dichtung bei der einzusetzenden Dichtungsvorrichtung gewährt, **dadurch gekennzeichnet, dass** das Hauptdichtungselement aus PTFE (11) vorerst mit einer dünnen Schicht (20) gummiartigem Silikon versehen ist, mit einem Anstrich oder Elastomer, im eingebautem Zustand ausreichend zur Dichtung eventueller Spalten zwischen der Fläche des PTFE-Dichtungselements (11) und der zu dichtenden Fläche (1), um einen Luftdurchlass (30) zu vermeiden während der Motor auf die Dichtigkeit der Dichtungsvorrichtung geprüft wird, wobei diese Prufüng durch Einspritzen von Luft in den Motor durchgeführt wird.

## Revendications

1. - Dispositif d'étanchéité en PTFE comprenant une garniture d'étanchéité ou un système d' étanchéité intégré, formé essentiellement par: une enveloppe annulaire (10); un élément d'étanchéité principale en polytétrafluoréthylène ("PTFE") (11), qui se base sur l'enveloppe et qui étanche contre l'arbre à rendre étanché, tel qu'un vilebrequin (1) ou autres, et la surface qui peut être pourvue d'une cannelure d'étanchéité hydrodynamique (12); et par le(s) élément(s) d'étanchéité de matériel en caoutchouc ou similaire (13), ce qui protège la portion d'étanchéité contre l'entrée de saleté, ou ce qui fournit toute l'étanchéité requise à la surface, où s'utilise le dispositif d'étanchéité, **caractérisée en ce que** l'élément d' étanchéité principale en PTFE (11) est originalement pourvu avec une fine couche (20) en silicone type caoutchouc, peinture, ou élastomère, suffisant à l'étanchéité, quand en position, des interstices éventuels, définis entre la surface de l'élément d'étanchéité en PTFE (11) et la surface à étancher (1), pour éviter le passage de l'air (30), pendant le test d'étanchéité du moteur réalisée par rapport au dispositif d'étanchéité, test lequel est réalisé avec de l'injection d'air à l'intérieur du moteur.
